# EUROPEAN PATENT APPLICATION

(11) **EP 4 414 110 A1**
(43) Date of publication of application: **14.08.2024**
(21) Application number: 23156226.5
(22) Date of filing: 13.02.2023
(51) Int. Cl.: B23B 51/02

(54) **DRILL**

(71) Applicant: AB Sandvik Coromant, 811 81 Sandviken (SE)
(72) Inventor: SMITH, Luke, 811 81 Sandviken (SE)
(74) Representative: Sandvik

(57) **Abstract**

Drill (1), comprising
- a front end (2) including a drill point (3) having an obtuse drill point angle (θ);
- a rear end (4);
- a centre axis (C) extending from the front end (2) to the rear end (3); and
- a peripheral surface (5) connecting the front end and the rear end, wherein at least two chip flutes (6) are formed in the peripheral surface (5), each chip flute (6) extending helicoidally around the centre axis (C) from the front end (2) towards the rear end (4).

For each of the chip flutes (6), a cutting edge (7) is formed at an intersection between a rake face (8) in the chip flute (6) and a clearance face (9) at the front end (2) of the drill. A radially outermost portion of the clearance face (9) adjacent the cutting edge (7) is a chamfered portion (91), wherein the part of the cutting edge (7) bordering the chamfered portion (91), when seen in a side view of the drill from a direction perpendicular to a plane containing the centre axis and the radially outermost point of the cutting edge, extends with respect to the centre axis (C) at a chamfer angle (α) that is between 5° and 25° smaller than half the drill point angle (θ). Moreover, a radially outermost portion of the rake face (8) is a rake reduced region (81) in which a reduced radial rake angle (γ2) is between 20° and 45° smaller than a preceding radial rake angle (γ1) in an adjacent region of the rake face (8) adjoining the rake reduced region (81) in a direction towards the centre axis (C).

## Description

### TECHNICAL FIELD

The invention relates to metal cutting, and in particular to drilling in heat resistant superalloys.

### BACKGROUND ART

Drilling is a common operation within the field of metal cutting. A common type of drill for metal cutting is a twist drill with two flutes and cutting edges extending radially from a tip of the drill to the periphery of the drill body. Such drill is often made of high-speed steel or cemented carbide.

Machining in different materials involves different challenges. Heat resistant superalloys (HRSA) are difficult to machine due to their strength retention in extreme heat, often resulting in significant tool wear or damage. Edge chipping is the predominant failure mode seen in this application, specifically on the outer corner region, thus it may be beneficial to introduce features which can improve structural integrity of this region. Corner modifications and/or edge preparations are sometimes used in this instance to strengthen the areas of high stress. However, drills according to the prior art are usually not well adapted for drilling in HRSA. That is, prior art drills that are able to drill high-quality holes in HRSA may suffer from inferior or unpredictable tool life, and drills that include corner modifications for improving tool life may not be able to drill holes of high quality in HRSA.

Hence, there is a need for improved drills for HRSA.

### SUMMARY

It is an object of the present invention to mitigate the shortcomings of the prior art and to provide a drill having increased tool life whilst maintaining hole quality when drilling in HRSA.

Thus, according to a first aspect, the invention relates to a drill comprising
- a front end including a drill point having an obtuse drill point angle;
- a rear end;
- a centre axis extending from the front end to the rear end; and
- a peripheral surface connecting the front end and the rear end, wherein at least two chip flutes are formed in the peripheral surface, each chip flute extending helicoidally around the centre axis from the front end towards the rear end.

For each of the chip flutes, a cutting edge is formed at an intersection between a rake face in the chip flute and a clearance face at the front end of the drill. A radially outermost portion of the clearance face adjacent the cutting edge is a chamfered portion, wherein the part of the cutting edge bordering the chamfered portion, when seen in a side view of the drill from a direction perpendicular to a plane containing the centre axis and the radially outermost point of the cutting edge, extends with respect to the centre axis at a chamfer angle that is between 5° and 25° smaller than half the drill point angle. Moreover, a radially outermost portion of the rake face is a rake reduced region in which a reduced radial rake angle is between 20° and 45° smaller than a preceding radial rake angle in an adjacent region of the rake face adjoining the rake reduced region in a direction towards the centre axis.

The inventor has found that the use of a chamfered portion at the corner of the drill as specified above, in combination with a rather aggressive "rake correction", in the form of a rake reduced region as specified above, significantly and unexpectedly improves the performance of the drill when machining in HRSA, both with respect to tool life and quality of the drilled holes, with a minimum of exit burr.

A common effect of machining HRSA materials is shrinkage of the material after machining, which increases the risk of rubbing between the margins of the drill and the machined surface. The edges at the margins of the drill, and the radially outermost portions of the cutting edges, are therefore particularly susceptible to chipping. A rake reduced region and a corner chamfer as proposed herein improves the chipping resistance. It has been found that the radial rake angle in the rake reduced region can be reduced quite much compared to the preceding radial rake angle without significantly impairing the quality of the machined surface, and that such relatively aggressive modification of the outermost portion of the rake face, when combined with a corner chamfer on the relief face that is large enough to sufficiently contribute in improving chipping resistance, but small enough not to increase exit burr, results in a drill that not only is able to produce holes of high quality but also demonstrates a very good overall chipping resistance and has an impressive tool life when drilling in HRSA materials.

The expression "radial rake angle", which is well-known to a person skilled in the art, is used herein with respect to different regions of the rake face at different radial locations along the flute surface, and should be understood as the angle that the rake face in such region, in a radial direction, forms to a radial line extending from the centre axis to the region of the rake face, or more precisely to the point of the region in which the radial rake angle is considered. If the point, with respect to an intended rotation direction of the drill, trails other parts of the rake face region located closer to the centre axis, the radial rake angle is negative. Correspondingly, if the point leads such other parts of the rake face region located closer to the centre axis, the radial rake angle is positive.

As used herein, a reduced radial rake angle being *smaller* than a preceding radial rake angle should be understood as that the reduced radial rake angle is less positive and/or more negative. In other words, if the preceding radial rake angle is negative (or zero), the reduced radial rake angle will also be negative. On the other hand, if the preceding radial rake angle is positive, the reduced radial rake angle is either positive (but less positive than the preceding radial rake angle - i.e. closer to zero), or negative.

A "point angle" of the drill, as used herein, and well-known to a person skilled in the art, is the inclusive angle between the cutting edges at the drill point, and, more specifically, for a conventional twist drill with two symmetrically arranged cutting edges, the angle between the two cutting edges projected upon a plane containing the centre axis of the drill and the respective radially outermost points of the cutting edges.

The transition between the chamfered portion and the non-chamfered portion of the clearance face, as well as the transition between the rake reduced region and other parts of the rake face, may be sharp or slightly rounded, i.e. formed by a small radius. For example, such rounded transition may be a result of the manufacturing process used, or deliberately applied in order to increase the strength of the borderline between the regions. The transition will always, though, constitute a clearly discernible border between the two respective surfaces.

The chamfered portion and the non-chamfered portion of the clearance face in the vicinity of the transition therebetween, and the rake reduced region and other parts of the rake face in the vicinity of the transition therebetween, may extend linearly in a side view and in a front view, respectively, or at least have curvatures that are significantly smaller than the curvature of the transition, such that the transition constitutes a clear border between the respective surfaces.

The clearance face should be formed such as to provide a clearance with respect to the machined surface, and may include one or more flat clearance surfaces or facets, or may be formed by a convexly curved surface sloping away from the cutting edge.

The drill may be made from cemented carbide, and may be non-coated or include a coating.

According to some embodiments, the rake reduced region has a linear, or substantially linear, extension in a radial direction. Accordingly, the reduced radial rake angle will not vary significantly along the rake reduced region. In some embodiments, depending on the manufacturing method (i.e. the way the rake reduced region is ground), the rake reduced region may not have a completely linear extension in the radial direction, but may in practice have a very small curvature, i.e. a big radius (sometimes referred to as a "curvature error"). Nevertheless, in such cases it may often be appropriate to approximate the small curvature by a straight line and consider the rake reduced region to have a substantially linear extension in the radial direction.

According to some embodiments, the chamfer angle is constant, or substantially constant, along at least a major part of the cutting edge bordering the chamfered portion. The chamfered portion on the clearance face may be formed in such way that the resulting chamfer angle is the same, or substantially the same, at all parts of the cutting edge that borders the chamfered portion. Accordingly, when seen in a side view from a direction perpendicular to a plane containing the centre axis and the radially outermost point of the cutting edge, the part of the cutting edge that borders the chamfered portion may extend along a straight line.

According to some embodiments, the reduced radial rake angle is between 30° and 40° smaller than the preceding radial rake angle. A reduced radial rake angle within this range may be particularly suitable when drilling in many types of HRSA materials. The reduced radial rake angle at the radially outermost point of the cutting edge may for example be 35°, or substantially 35°, smaller than the preceding radial rake angle.

According to some embodiments, the chamfer angle is between 5° and 15° smaller than half the drill point angle. A chamfer angle within this range may be particularly suitable when drilling in many types of HRSA materials. The chamfer angle may for example be 10°, or substantially 10°, smaller than half the drill point angle.

According to some embodiments, the drill point angle is between 135° and 145°. As an example, the drill point angle may be 140°, or substantially 140°, resulting in a chamfer angle within a range of 45° - 65°.

According to some embodiments, the reduced radial rake angle is negative and the preceding radial rake angle is positive. According to some embodiments, the reduced radial rake angle is between -25° and -5°. According to some embodiments, the preceding radial rake angle is between 5° and 25°. As an example, the preceding radial rake angle may be between 10° and 20°, and for example 15°. A positive preceding radial rake angle normally corresponds to a "hooked" flute shape which, in the absence of a rake correction, would introduce a weakness on the edge of the flute, thus becoming susceptible to chipping. Hence, with a preceding radial rake angle that is positive between 5° and 25°, it may be advantageous to apply a reduced radial rake angle that is negative, and in particular a reduced radial rake angle between -25° and -5°, for the purpose of edge chipping resistance.

According to some embodiments, a radial extension, from the peripheral surface towards the centre axis, of the part of the cutting edge bordering the chamfered portion is between 1% and 10% of the cutting diameter of the drill, for example between 2% and 6% of the cutting diameter of the drill.

According to some embodiments, a radial extension, from the peripheral surface towards the centre axis, of the rake reduced region is between 1% and 10% of the cutting diameter of the drill, for example between 2% and 6% of the cutting diameter of the drill.

The radial extension of the part of the cutting edge bordering the chamfered portion may be equal to the radial extension of the rake reduced region, such that the transition into a chamfer angle and to a reduced rake angle occurs at the same point along the cutting edge. However, according to other embodiments, the radial extension of the part of the cutting edge bordering the chamfered portion may be greater than the radial extension of the rake reduced region, or vice versa. Hence, the chamfered portion and the rake reduced region do not necessarily extend equally far in the radial direction.

According to some embodiments, the rake reduced region extends axially in the flute at the periphery of the drill along a major part of the axial extension of the flute. Even though the axial extension of the rake reduced region is not a crucial parameter for the performance and tool life of the drill, such configuration is particularly advantageous to enable reconditioning of the drill.

According to some embodiments, each flute comprises a web thinning, and the cutting edge comprises:
- a secondary cutting edge formed at the intersection between the relief surface and the web thinning, and
- a primary cutting edge that extends from the radially outermost point of the secondary cutting edge to the peripheral surface of the drill.

A web thinning and a corresponding secondary cutting edge makes it possible to maintain a sufficient overall web thickness while limiting the chisel edge length.

According to some embodiments, a shortest distance between
- a first line extending from the radially outermost point of the secondary cutting edge to a radially innermost point of the part of the cutting edge bordering the rake reduced region, and
- a second line extending through the centre axis in parallel to the first line,
is between 2% and 10% of the cutting diameter of the drill.

Such configuration, wherein the cutting edges are located "past centre" just by a small distance, in combination with the rake reduced region and the chamfered surface at the corner of the relief surface, is believed to further improve the strength and chipping resistance of the drill.

According to a second aspect, the invention relates to the use of a drill according to any of the embodiments described herein for drilling in heat resistant superalloys.

### BRIEF DESCRIPTION OF DRAWINGS

The solution will now be described in more detail by means of exemplary embodiments and with reference to the accompanying drawings, in which:
Fig. 1 is a perspective view of a drill, including an enlarged view of the drill tip, according to an embodiment of the invention.
Fig. 2 is a side view of the drill, as seen in a direction towards a peripheral corner of one of the cutting edges, including an enlarged view of the drill tip.
Fig. 3 is another enlarged side view of the drill tip, corresponding to the enlarged view in Fig. 2 but rotated by 90° around the drill centre axis, i.e. as seen from a direction perpendicular to a plane containing the centre axis of the drill and the radially outermost point of the cutting edge.
Fig. 4 is a front end view of the drill, as seen from a direction IV as indicated in Fig. 2.
Fig. 5 shows a cross-section of the drill in a section V -V indicated in Fig. 2.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

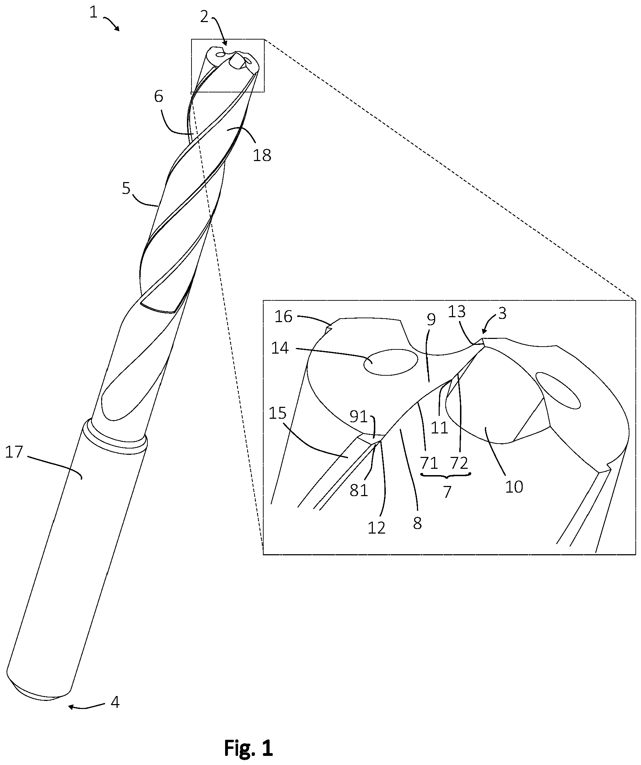

With reference to Figs. 1-5, a drill 1 according to an embodiment of the invention will now be described.

The drill 1 comprises a front end 2 and a rear end 4. The front end 2 includes a drill point 3. A centre axis C extends from the rear end 4 to the front end 2. A peripheral surface 5 extends between the rear end 4 and the front end 2, concentric with the centre axis C. Two flutes 6 are formed in the peripheral surface and extends axially from the front end 2 following a curved helical path around the longitudinal axis C. Thus, the peripheral surface 5 includes two lands 18 extending axially in a corresponding way as the flutes 6.

The drill includes double margins 15, 16. Hence, each land 18 includes a margin 15 formed adjacent the leading edge of the land 18, and a margin 16 formed at the heel (i.e. the trailing edge of the land 18). Adjacent its rear end, the drill includes a shank 17.

The flutes 6 are symmetrically arranged and include corresponding features. For clarity, reference numbers are included in Fig. 1 only for features related to one of the flutes 6.

Cutting edges 7 are formed at an intersection between a rake face 8 in each flute 6 and a clearance surface 9 located at the front end 2. The clearance surface 9 behind the cutting edge 7 is convexly curved, sloping away from the cutting edge 7, i.e. with an increasing clearance angle when moving away from the cutting edge 7.

A central region of each flute 6 includes a web thinning 10 in the form of a ground concavely arched surface. Thereby, a central part of the rake face 8 is formed by the wall of the web thinning 10. Accordingly, the cutting edge 7 includes a secondary cutting edge 72 extending from a chisel edge 13 at the centre of the drill, all along the rake face formed by the web thinning 10. The cutting edge 7 also includes a primary cutting edge 71 that extends to the peripheral surface 5 of the drill from a point 11 where the secondary cutting edge 72 ends.

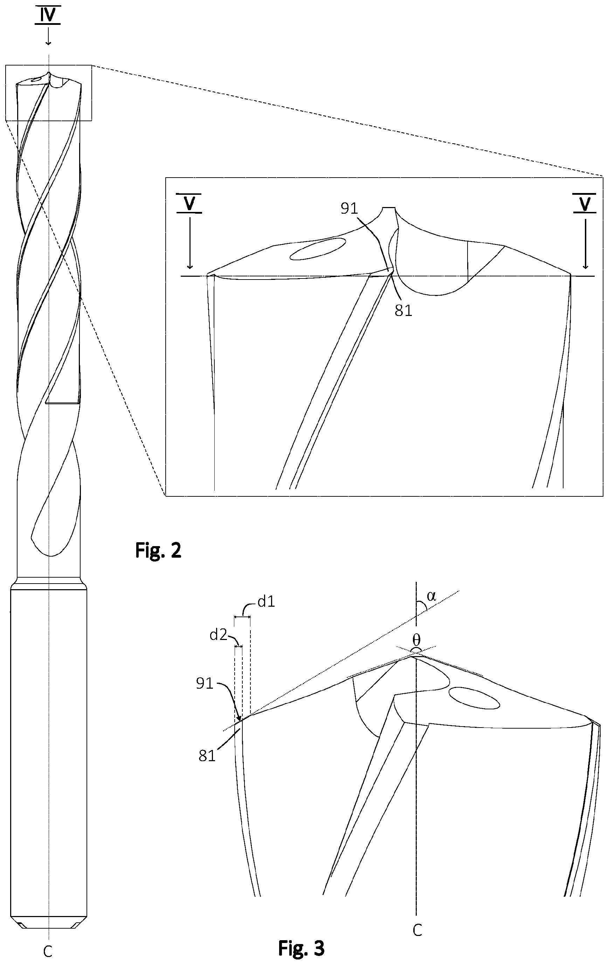

The drill 1 has a drill point angle θ (see Fig. 3) of 140°. Accordingly, in a side view as shown in Fig. 3, each secondary cutting edge 72 forms an angle of 70° to the centre axis C.

The drill 1 further includes two coolant channels extending axially within the drill body and having outlets 14 located at the front end 2 of the drill.

With respect to the centre axis C, a radially outermost portion of the clearance face 9 adjacent the primary cutting edge 71 is chamfered, forming a chamfered portion 91 of the clearance face 9. With reference to Fig. 3, the part of the primary cutting edge 71 bordering the chamfered portion 91, when seen in a side view of the drill from a direction perpendicular to a plane containing the centre axis C and the radially outermost point of the cutting edge 7, extends with respect to the centre axis C at a chamfer angle α that, in the illustrated embodiment, is 10° smaller than half the drill point angle θ. Accordingly, with a drill point angle θ of 140°, the chamfer angle α is 60°.

In addition, a radially outermost portion of the rake face 8 in the flute 6 is a rake reduced region 81 in which the radial rake angle is a reduced radial rake angle γ2 that, in the illustrated embodiment, is approximately 35° smaller than the preceding radial rake angle γ1 in an adjacent region of the rake face 8 adjoining the rake reduced region 81 in a direction towards the centre axis C.

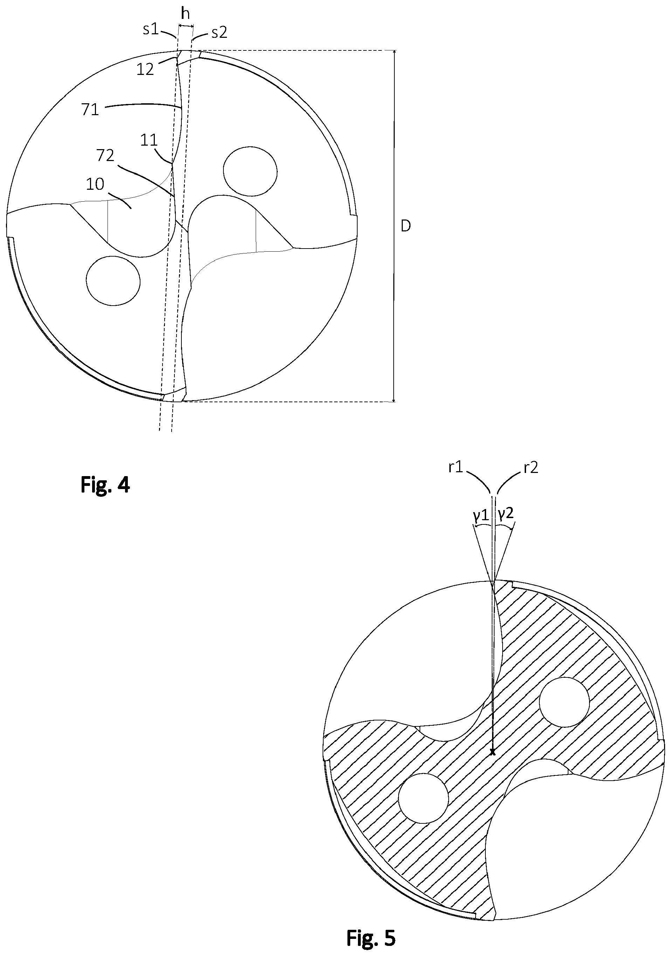

As seen in Fig. 5, the preceding radial rake angle γ1, i.e. the radial rake angle at a point on the rake face 8 immediately preceding the transition to the rake reduced region 81, is the angle between the radial rake face (or a radial tangent to the rake face 8 at the point) and a radial line r1 from the centre axis C to the point. The reduced rake angle γ2, i.e. the radial rake angle at a radially outermost point of the rake reduced region 81, is the angle between the radial rake face of the rake reduced region 81 and a radial line r2 from the centre axis C to the radially outermost point of the rake reduced region.

In the illustrated embodiment, as best seen in Fig. 5, the preceding radial rake angle γ1 is positive, about 15°, and the reduced radial rake angle γ2 at the periphery of the drill is negative, about -20°.

The rake reduced region 81 has a linear extension in the radial direction, i.e. it extends along a straight line when seen in a cross-section perpendicular to the centre axis C, as seen in Fig. 5. The reduced radial rake angle will nonetheless vary somewhat along the radial extension of the rake reduced region (as long as the radial rake angle is not zero). However, when the rake reduced region has a small radial extension in relation to the cutting diameter of the drill, the change of the radial rake angle over the rake reduced region will be quite small, and in many cases it may be appropriate to disregard the variation and consider the reduced radial rake angle as substantially constant (i.e. equal to γ2) over the whole rake reduced region.

During the manufacturing process of the drill, the rake reduced region 81 is created by grinding, such that a rake reduced region is formed that extends axially in the flute at the periphery of the drill along a major part of the axial extension of the flute 6. Such grinded surface is sometimes referred to as a "C-land". In other embodiments, for example if using a different manufacturing process, the region 81 may have a much smaller axial extension in the flute, and for example be located adjacent the cutting edge only, in the immediate vicinity thereof.

The rake reduced region 81 and the chamfered portion 91 of the clearance face 9 extend in a radial direction from the peripheral surface 5 of the drill. The respective radial extensions of these regions are not necessarily the same, though. The chamfered portion 91 has its greatest radial extension adjacent the cutting edge. In the illustrated embodiment, the radial extension d1 from the peripheral surface 5 of the primary cutting edge 71 bordering the chamfered portion 91 is greater than the rake reduced region's 81 radial extension d2 from the peripheral surface 5, as illustrated in Fig. 3. The radial extension d1 of the part of the cutting edge bordering the chamfered portion 91 is approximately 4% of the drill diameter D, and the radial extension d2 of the rake reduced region is approximately 2% of the drill diameter D.

In the illustrated embodiment, the cutting edges 7 are located such that a shortest distance h between parallel lines s1 and s2 (shown in Fig. 4) is about 5% of the cutting diameter D of the drill, wherein the line s1 extends from the radially outermost point 11 of the secondary cutting edge 72 to a radially innermost point 12 of the part of the primary cutting edge 71 that borders the rake reduced region 81, and the line s2 extends through the centre axis C in parallel to the first line s1.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited.

## Claims

1. A drill (1), comprising:
- a front end (2) including a drill point (3) having an obtuse drill point angle (θ);
- a rear end (4);
- a centre axis (C) extending from the front end (2) to the rear end (4); and
- a peripheral surface (5) connecting the front end and the rear end, wherein at least two chip flutes (6) are formed in the peripheral surface (5), each chip flute (6) extending helicoidally around the centre axis (C) from the front end (2) towards the rear end (4);
wherein, for each of the chip flutes (6), a cutting edge (7) is formed at an intersection between a rake face (8) in the chip flute (6) and a clearance face (9) at the front end (2) of the drill, **characterized in that**
- a radially outermost portion of the clearance face (9) adjacent the cutting edge (7) is a chamfered portion (91), wherein the part of the cutting edge (7) bordering the chamfered portion (91), when seen in a side view of the drill from a direction perpendicular to a plane containing the centre axis (C) and the radially outermost point of the cutting edge (7), extends with respect to the centre axis (C) at a chamfer angle (α) that is between 5° and 25° smaller than half the drill point angle (θ), and
- a radially outermost portion of the rake face (8) is a rake reduced region (81) in which a reduced radial rake angle (γ2) is between 20° and 45° smaller than a preceding radial rake angle (γ1) in an adjacent region of the rake face (8) adjoining the rake reduced region (81) in a direction towards the centre axis (C).

2. A drill according to claim 1, wherein the rake reduced region (81), in a radial direction, has a linear, or substantially linear, extension.

3. A drill according to any of the previous claims, wherein the chamfer angle (α) is constant, or substantially constant, along at least a major part of the cutting edge bordering the chamfered portion (91).

4. A drill according to any of the previous claims, wherein the reduced radial rake angle (γ2) is between 30° and 40° smaller than the preceding radial rake angle (γ1).

5. A drill according to any of the previous claims, wherein the chamfer angle (α) is between 5° and 15° smaller than half the drill point angle (θ).

6. A drill according to any of the previous claims, wherein the drill point angle (θ) is between 135° and 145°.

7. A drill according to any of the previous claims, wherein the reduced radial rake angle (γ2) is negative and the preceding radial rake angle (γ1) is positive.

8. A drill according to any of the previous claims, wherein the reduced radial rake angle (γ2) is negative and between -25° and -5°.

9. A drill according to any of the previous claims, wherein the preceding radial rake angle (γ1) is positive and between 5° and 25°.

10. A drill according to any of the previous claims, wherein a radial extension (d1), from the peripheral surface (5) towards the centre axis (C), of the part of the cutting edge (7) bordering the chamfered portion (91) is between 1% and 10% of the cutting diameter (D) of the drill.

11. A drill according to any of the previous claims, wherein a radial extension (d2), from the peripheral surface (5) towards the centre axis (C), of the rake reduced region (81) is between 1% and 10% of the cutting diameter (D) of the drill.

12. A drill according to any of the previous claims, wherein the rake reduced region (81) extends axially in the flute (6) at the periphery of the drill along a major part of the axial extension of the flute (6).

13. A drill according to any of the previous claims, wherein the flute comprises a web thinning (10), and the cutting edge (7) comprises:
- a secondary cutting edge (72) formed at the intersection between the relief surface (9) and the web thinning (10), and
- a primary cutting edge (71) that extends from the radially outermost point (11) of the secondary cutting edge (10) to the peripheral surface of the drill.

14. A drill according to claim 13, wherein a shortest distance (h) between
- a first line (s1) extending from the radially outermost point (11) of the secondary cutting edge (10) to a radially innermost point (12) of the part of the cutting edge bordering the rake reduced region (81), and
- a second line (s2) extending through the centre axis (C) in parallel to the first line (s1),
is between 2% and 10% of the cutting diameter (D) of the drill.

15. Use of a drill according to any of the previous claims for drilling in heat resistant superalloys.
